# FASCICULE DE BREVET EUROPEEN

(11) **EP 0 408 088 B1**
(45) Date de publication et mention de la délivrance du brevet: **24.05.1995**
(21) Numéro de dépôt: 90117440.9
(22) Date de dépôt: 26.02.1987
(51) Int. Cl.: A01D 34/66

(54) **Faucheuse rotative**
Kreiselmäher
Rotary mower

(30) Priorité: 27.02.1986 FR 8602899
(43) Date de publication de la demande: 16.01.1991
(62) Demande divisionnaire de: 87440011.2
(73) Titulaire: KUHN S.A., F-67700 Saverne (FR)
(72) Inventeur: Ermacora, Rino, F-67700 St. Jean Saverne (FR); Neuerburg, Horst, F-67700 Saverne (FR)

(56) Documents cités:
- EP-A- 0 126 518
- EP-A- 0 171 341
- FR-A- 2 351 580
- GB-A- 2 059 236
- US-A- 1 536 514
- US-A- 2 625 784

## Description

La présente invention concerne une faucheuse comportant des organes de coupe rotatifs munis d'au moins un outil de coupe, au moins un de ces organes de coupe rotatifs étant entraîné par des moyens de transmission logés dans un carter s'étendant sous lesdits organes de coupe rotatifs, ledit carter comportant des modules comprenant chacun un boîtier dans lequel est guidé en rotation un organe de coupe, une entretoise s'étendant entre ce boîtier et le boîtier d'un module adjacent et deux brides dont une première s'étend du côté du boîtier et la deuxième s'étend à l'extrémité de l'entretoise éloignée du boîtier, ces brides qui comportent au moins une aile, étant destinées à la liaison de deux modules adjacents l'un à l'autre au moyen de tirants d'assemblage traversant à la fois la partie frontale et la partie arrière de la première bride d'un module et de la deuxième bride du module adjacent, chacune desdites brides comportant une aile présentant une face d'appui contre laquelle s'appuient les tirants d'assemblage correspondants, et une aile présentant une face de contact, la face de contact de la première bride d'un module, destinée à être en contact avec la face de contact de la deuxième bride du module adjacent, s'étendant du côté du plan vertical contenant l'axe de rotation de l'organe de coupe correspondant et perpendiculaire à l'axe longitudinal du carter, opposé à celui où s'étend l'entretoise correspondante.

Une telle faucheuse est décrite dans la EP-A-0 171 341. Cette faucheuse connue comporte un carter constitué notamment de modules comprenant chacun un boîtier dans lequel est guidé en rotation un organe de coupe, une entretoise s'étendant entre ce boîtier et le boîtier d'un module adjacent et deux brides dont une première s'étend du côté du boîtier et la deuxième s'étend à l'extrémité de l'entretoise éloignée du boîtier. Ces brides sont destinées à la liaison dudit module au(x) module(s) adjacent(s) au moyen de trois boulons d'assemblage, dont l'un traverse la partie frontale des deux brides adjacentes et les deux autres la partie arrière de celles-ci.

Cette faucheuse connue a l'avantage d'avoir un carter d'une construction très intéressante. En effet, le caractère modulaire de la construction du carter permet de fabriquer des faucheuses de largeur de travail différente, tout en réduisant, voire en supprimant les pièces spécifiques à chaque largeur de travail. La production de telles faucheuses est donc très facile et permet de proposer toute une gamme de faucheuses à un coût très intéressant.

Il s'avère cependant que les boîtiers des modules de cette faucheuse connue pourraient subir des déformations très importantes préjudiciables au bon fonctionnement des organes contenus dans ceux-ci et servant au guidage et à l'entraînement en rotation des organes de coupe rotatifs correspondants.

Il pourrait du reste également apparaître des problèmes au niveau des boulons d'assemblage qui ne semblent pas non plus capables de résister aux efforts de traction qui peuvent agir sur eux pendant l'utilisation de la faucheuse.

Partant de cette faucheuse connue, le but de la présente invention consiste à améliorer la forme des brides, de telle sorte que les déformations des boîtiers restent très limitées, tout en permettant parallèlement une augmentation de la tenue des organes d'assemblage.

A cet effet, la faucheuse selon la présente invention est caractérisée en ce que la face d'appui de la première bride d'un module (c'est-à-dire la bride qui s'étend du côté du boîtier dudit module) s'étend du côté du plan vertical (contenant l'axe de rotation de l'organe de coupe correspondant et perpendiculaire à l'axe longitudinal du carter) où s'étend également l'entretoise dudit module, et que les tirants d'assemblage liant ce module et le module adjacent entre eux sont exclusivement au nombre de deux, l'un traversant la partie frontale des ailes des brides respectives et l'autre la partie arrière de celles-ci.

Grâce à la forme très particulière de la première bride de chaque module, les efforts qui agissent sur celle-ci, tant pendant le travail que pendant le transport, sont bien transmis dans le module au niveau du boîtier qui contient les organes servant au guidage et à l'entraînement en rotation de l'organe de coupe rotatif correspondant, sans que ledit boîtier subisse des déformations préjudiciables au bon fonctionnement desdits organes de guidage et d'entraînement. Dans l'invention, il est également prévu que les tirants d'assemblage correspondant à deux modules adjacents soient exclusivement au nombre de deux, l'un traversant la partie frontale des ailes des brides respectives et l'autre la partie arrière de celles-ci. Ceci permet tout d'abord d'augmenter leur diamètre respectif, mais permet aussi, en liaison avec la forme particulière de la première bride, d'augmenter leur longueur, sans que le tirant d'assemblage traversant la partie frontale des ailes des brides gêne le bon fonctionnement de la faucheuse.

Selon une caractéristique supplémentaire de l'invention, il peut être prévu que la première bride d'un module soit plus large que la deuxième bride de celui-ci. La première bride dudit module, la deuxième bride du module adjacent ainsi que les deux tirants d'assemblage liant ces deux brides entre elles peuvent ainsi s'étendre sous l'organe de coupe correspondant.

Selon une autre caractéristique supplémentaire de l'invention, il peut être prévu que les ailes des deux brides d'un module soient munies respectivement à l'avant et à l'arrière d'un trou servant au passage des tirants d'assemblage, et que l'axe commun des trous avant et l'axe commun des trous arrière s'étendent dans le voisinage du plan médian sensiblement horizontal de la face de contact de chaque bride.

Il est connu de munir le carter d'une faucheuse à organes de coupe rotatifs entraînés par le bas d'un patin protecteur sous chacun desdits organes de coupe. Celui-ci comporte, en général, une partie frontale ayant, en vue de dessus, une forme sensiblement circulaire de sorte à protéger l'organe de coupe correspondant, ainsi qu'un patin s'étendant sous le carter. L'accrochage éventuel de débris végétaux à la partie frontale des brides ainsi qu'aux tirants d'assemblage frontaux peut être évité si la partie frontale de la première bride d'un module et de la deuxième bride du module adjacent, de même que le tirant d'assemblage traversant la partie frontale de ces deux brides, s'étendent sensiblement à l'intérieur du patin protecteur correspondant.

Selon une autre caractéristique supplémentaire de l'invention, il peut être prévu que la face d'appui de chaque bride présente, au niveau du tirant d'assemblage correspondant, une forme de portion de surface cylindrique, et que la face dudit tirant d'assemblage destinée à venir en contact avec cette face d'appui a également la forme d'une portion de surface cylindrique de dimension sensiblement identique à celle de ladite face d'appui. On augmente ainsi la surface de la face d'appui des brides sans pour autant augmenter l'épaisseur du carter.

Avantageusement, l'incurvation de ladite face d'appui de chaque bride en forme de portion de surface cylindrique est dirigée vers la face de contact de ladite bride. Il est ainsi possible d'usiner très soigneusement la face d'appui pour que le contact entre celle-ci et la face du tirant d'assemblage correspondant destinée à venir en contact avec cette face d'appui soit optimal en vue d'une bonne tenue du carter après assemblage des différents modules entre eux.

Les tirants d'assemblage pourront être avantageusement constitués chacun par un tirant, deux rondelles et un écrou.

Lorsqu'il sera prévu que la face d'appui des brides soit en forme de portion de surface cylindrique, les faces du tirant d'assemblage correspondant destinées à venir en contact avec lesdites faces d'appui seront avantageusement prévues sur les deux rondelles.

Lorsqu'il sera également prévu qu'un module comporte au moins une partie contre laquelle vient en butée au moins un côté d'un écrou respectif, le blocage de la rotation de cet écrou lors du vissage ou du dévissage du tirant se fera automatiquement. Il n'est donc pas nécessaire d'utiliser un outil pour bloquer la rotation de l'écrou ce qui facilitera d'autant l'opération d'assemblage des modules entre eux.

Afin que ce blocage soit effectivement réalisé, tout en laissant un certain jeu entre le côté de l'écrou et la partie concernée du module compatible avec les tolérances générales de la fonderie, l'écrou pourra avantageusement avoir une forme carrée. Le côté dudit écrou aura ainsi une longueur relativement grande de sorte que le blocage soit toujours parfaitement réalisé.

Il pourra également être prévu que chaque tirant d'assemblage ait une tête ronde qui soit munie d'un logement central à six pans. Ceci permet de garder au carter sa compacité, sans pour autant agir au détriment de la facilité du montage. Il est en effet très aisé d'accéder à la tête du tirant avec un outil tel qu'une visseuse pneumatique par exemple.

L'invention sera parfaitement comprise à la lumière de la description ci-dessous d'un exemple non limitatif de réalisation de celle-ci représenté sur le dessin annexé sur lequel :
- la figure 1 représente une vue de dessus de la barre de coupe d'une faucheuse selon l'invention,
- la figure 2 représente une vue de dessus à une échelle agrandie et partiellement coupée suivant le plan II (figure 3) de la barre de coupe de la figure 1 sans organes de coupe,
- La figure 3 représente une vue en coupe suivant le plan III (figure 2) de la barre de coupe de la figure 2,
- La figure 4 représente une vue en coupe suivant le plan IV (figure 2) de la barre de coupe de la figure 2,
- La figure 5 représente une vue en coupe suivant le plan V (figure 2) de la barre de coupe de la figure 2, et
- La figure 6 représente une vue en coupe suivant le plan VI (figure 2) de la barre de coupe de la figure 2.

Avant de commencer la description des différentes figures, il y a lieu de faire observer que celle-ci est faite en admettant que la barre de coupe de la faucheuse repose, comme pendant le travail, sur un plan horizontal. Les notions d'horizontalité et de verticalité sont donc clairement définies. Du reste, le dessus de la barre de coupe sera le côté de celle-ci où s'étendent les organes de coupe. Les expressions "sur", "sous", "dessus", "dessous", "supérieur", "inférieur", sont donc également clairement définies. Enfin, l'avant de la barre de coupe est le côté de celle-ci où les organes de coupe doivent couper le produit à récolter durant l'utilisation de la faucheuse. Les expressions "avant", "arrière", "devant", "derrière" sont de ce fait aussi clairement définies.

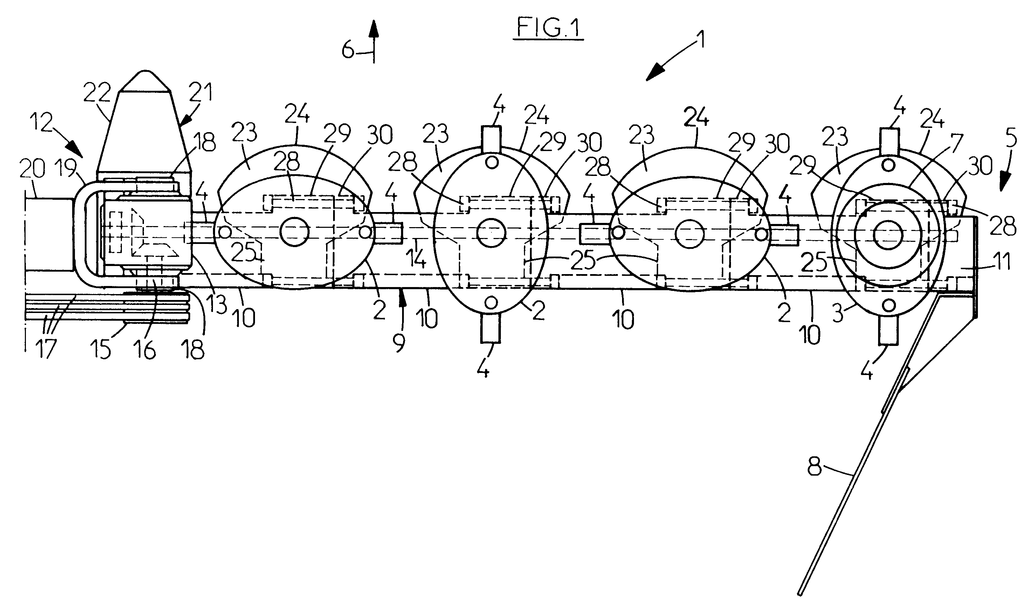

Sur la figure 1, est représentée une faucheuse selon l'invention ou plus précisément la barre de coupe (1) de celle-ci. Cette barre de coupe (1) comporte, de manière non limitative, quatre organes de coupe (2, 3) tournant chacun autour d'un axe (37) dirigé vers le haut. Chaque organe de coupe (2 ; 3) comporte deux outils de coupe (4). De préférence, le montage des outils de coupe (4) est réalisé de sorte que lesdits outils de coupe (4) s'étendent vers l'extérieur sous l'effet de la force centrifuge et qu'ils puissent pivoter vers l'arrière, lorqu'ils rencontrent un obstacle lors de leur rotation. L'organe de coupe (3) situé à l'extrémité droite (5) de la barre de coupe (1), vue dans le sens de travail défini par la flèche (6), est surmonté d'une coiffe (7). Cette coiffe (7) collabore avec un dispositif de réduction de l'andain de produit coupé tel que la planche à andains (8) par exemple, de sorte que l'andain de produit coupé soit séparé du produit encore sur pied.

Les organes de coupe (2 ; 3) sont guidés en rotation dans un carter (9) disposé sous lesdits organes de coupe (2 ; 3). Ce carter (9) est tout d'abord formé par une succession de modules (10). A l'extrémité droite (5) de la barre de coupe (1), le carter (9) est ensuite muni d'un module d'extrémité (11). A l'extrémité gauche (12) de la barre de coupe (1), le carter (9) est enfin muni d'un carter de renvoi (13).

Dans le carter (9) sont logés des moyens de transmission (14), tels que par exemple un arbre de transmission qui collabore avec des roues dentées non représentées, en vue d'entraîner en rotation les organes de coupe (2 ; 3). L'entraînement en rotation de ces moyens de transmission (14) est réalisé par l'intermédiaire d'un mécanisme d'entraînement logé dans le carter de renvoi (13) qui est connu de l'homme de l'art. Ce mécanisme d'entraînement reçoit le mouvement d'une poulie (15) calée sur l'axe (16). La poulie (15) est entraînée en rotation au moyen d'une autre poulie non représentée par l'intermédiaire de courroies (17). Cette autre poulie est, d'une manière connue de l'homme de l'art, entraînée par la prise de force d'un tracteur non représenté, auquel est liée la faucheuse pendant l'utilisation, par l'intermédiaire d'un arbre de transmission à joints universels également non représenté.

Le carter de renvoi (13) comporte deux portées cylindriques (18) sensiblement concentriques avec l'axe (16) d'entrée dudit carter de renvoi (13). Ces portées cylindriques (18) supportent une chape (19) fixée à un châssis (20) par l'intermédiaire duquel la faucheuse est liée au tracteur. Avec cet agencement, la barre de coupe (1) peut suivre les dénivellations du sol en pivotant autour de l'axe géométrique des portées cylindriques (18), sans que les divers organes d'entraînement soient soumis à des contraintes supplémentaires. Par ailleurs, il est possible de pivoter la barre de coupe (1) dans une position sensiblement verticale pour réduire la largeur de la faucheuse au transport sur route.

A l'extrémité gauche (12) du carter (9) et sous celui-ci ou plus précisément sous le carter de renvoi (13), est agencé un sabot (21) qui a une partie avant (22) relevée comme l'avant d'un ski. Ce sabot (21) permet à la faucheuse de glisser sur le sol pendant le travail et d'éviter les accrochages de produit coupé au carter de renvoi (13).

A l'avant, sous chaque organe de coupe (2 ; 3), le carter (9) est muni de patins protecteurs (23). Ces patins protecteurs (23) comportent une partie frontale (24) présentant, en vue de dessus, une forme sensiblement circulaire dont le rayon est plus petit que le rayon de la trajectoire extrême des outils de coupe (4). Par ailleurs, lesdits patins protecteurs (23) comportent une partie arrière (25), en forme de patin, sur laquelle repose également la barre de coupe (1) pendant le travail.

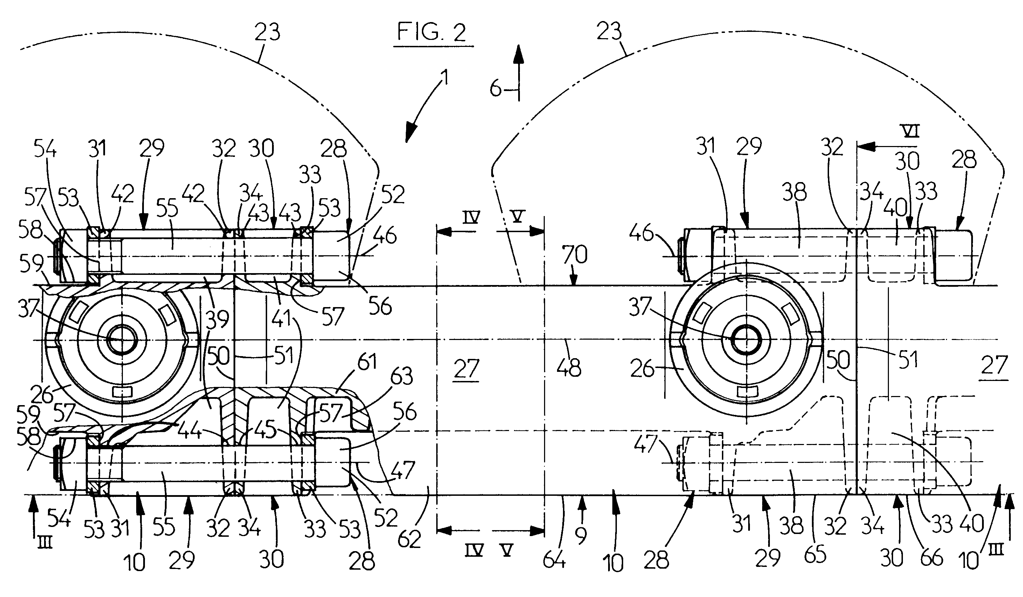

Sur les figures 2 à 6, on voit plus précisément l'agencement de la liaison entre les différents modules (10) du carter (9) de la barre de coupe (1).

Ces modules (10) se composent d'un boîtier (26), dans lequel est guidé en rotation l'organe de coupe (2 ; 3) correspondant, et d'une entretoise (27) qui s'étend entre ce boîtier (26) et le boîtier (26) d'un module (10) adjacent.

Les différents modules (10) sont liés l'un à l'autre au moyen de tirants d'assemblage (28). Pour ce faire, chaque module (10) comporte, à chacune de ses extrémités, une bride (29 ; 30), et les brides (29 ; 30) de deux modules (10) adjacents sont liées entre elles par deux tirants d'assemblage (28).

Comme visible sur les différentes figures, la bride (29) de chaque module (10), qui s'étend du côté du boîtier (26) correspondant, comporte deux ailes (31, 32) et la bride (30) dudit module (10), qui s'étend à l'extrémité de l'entretoise (27) correspondante, éloignée du boîtier (26) correspondant, comporte deux ailes (33, 34). Ces ailes (31, 32 ; 33, 34) des brides (29 ; 30), qui s'étendent à l'avant et à l'arrière des modules (10), sont dirigées transversalement à l'axe longitudinal (48) du carter (9), préférentiellement sensiblement dans la direction de travail (6) (c'est-à-dire, en vue de dessus, au moins sensiblement perpendiculairement à l'axe longitudinal (48) du carter (9)) et s'étendent sensiblement verticalement.

En sus, elles s'étendent à une certaine distance l'une de l'autre. Ainsi, la bride (29) située du côté du boîtier (26) d'un module (10), a son aile (31), contre laquelle s'appuient les tirants d'assemblage (28) correspondants, située du même côté du plan vertical (36) perpendiculaire à l'axe longitudinal (48) du carter (9) et passant par l'axe de rotation (37) de l'organe de coupe (2 ; 3) guidé dans ledit boîtier (26), que l'entretoise (27) correspondante, alors que son autre aile (32), destinée à venir en contact avec l'aile (34) de la bride (30) du module (10) adjacent est située de l'autre côté dudit plan vertical (36). Ainsi, la face (57) de l'aile (31) de la bride (29), qui sert d'appui aux tirants d'assemblage (28) correspondants, s'étend du même côté dudit plan vertical (36) que l'entretoise (27) correspondante, tandis que la face (50) de l'aile (32) de ladite bride (29), qui est destinée à venir en contact avec la face de contact (51) de l'aile (34) de la bride (30) du module (10) adjacent, s'étend de l'autre côté dudit plan vertical (36). De cette sorte, les sollicitations sont bien transmises dans le module (10) au niveau du boîtier (26) sans trop déformer ledit boîtier (26).

Les ailes (33, 34) de la bride (30) située à l'extrémité de l'entretoise (27) éloignée du boîtier (26), s'étendent également à une certaine distance l'une de l'autre. La distance qui sépare les deux ailes (33, 34) de la bride (30), est néanmoins plus petite que la distance qui sépare les deux ailes (31, 32) de la bride (29). Ceci permet de loger aisément la partie frontale des brides (29 ; 30) ainsi que les tirants d'assemblage (28), situés à l'avant sensiblement à l'intérieur des patins protecteurs (23) correspondants. On évite ainsi que des débris végétaux ne puissent éventuellement rester accrochés aux brides (29 ; 30) et aux tirants d'assemblage frontaux (28).

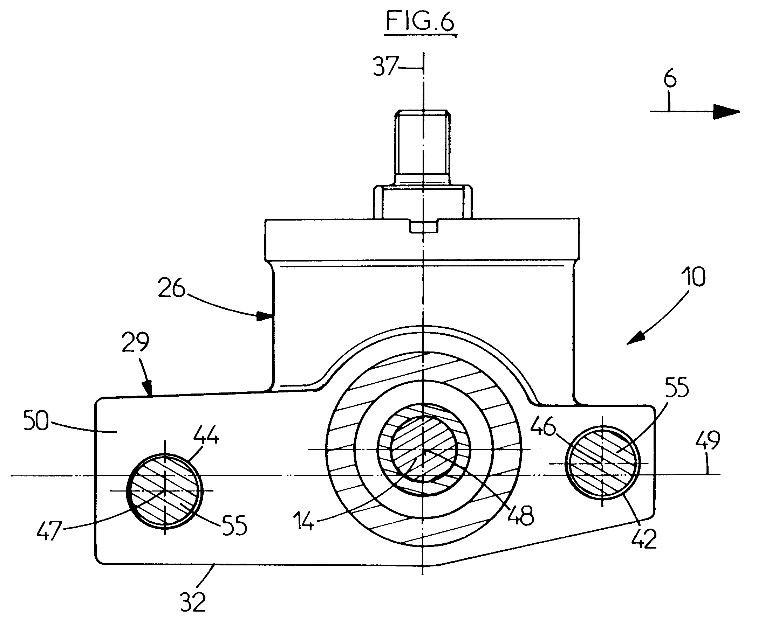

Comme dit plus haut, les brides (29 ; 30) se touchent par les ailes (32 ; 34) et les ailes (31 ; 33) servent de face d'appui aux tirants d'assemblage (28). De cette sorte, les tirants d'assemblage (28) peuvent avoir une longueur suffisante leur permettant de bien résister aux sollicitations auxquelles ils sont soumis et la face de contact (50 ; 51) de chaque aile (32 ; 34) peut avoir une surface suffisante pour ne pas être soumise au matage (figure 6), tout en ayant des brides (29 ; 30) qui peuvent être coulées de manière saine.

Les ailes (31, 32) de chaque bride (29) sont liées entre elles par deux ailes de raccord (38, 39) et les ailes (33, 34) de chaque bride (30) sont liées entre elles par deux ailes de raccord (40, 41). Ces ailes de raccord (38, 39 ; 40, 41) sont dirigées transversalement par rapport à la direction de travail (6) (c'est-à-dire, transversalement par rapport auxdites ailes (31, 32 ; 33, 34)) et s'étendent sensiblement horizontalement. Elles sont en sus raccordées au corps du module (10). Les ailes de raccord (38 ; 40) s'étendent à la partie haute des ailes (31, 32 ; 33, 34), tandis que les ailes de raccord (39 ; 41) s'étendent à la partie basse desdites ailes (31, 32 ; 33, 34). Ces ailes de raccord (38, 39 ; 40, 41) servent à limiter, de manière très importante, la flexion des ailes (31, 32 ; 33, 34) des brides (29 ; 30).

Grâce à cet agencement, les brides (29 ; 30) ont ainsi à l'avant et à l'arrière, vues dans la direction de travail (6), une forme de tube à section sensiblement quadrilatérale.

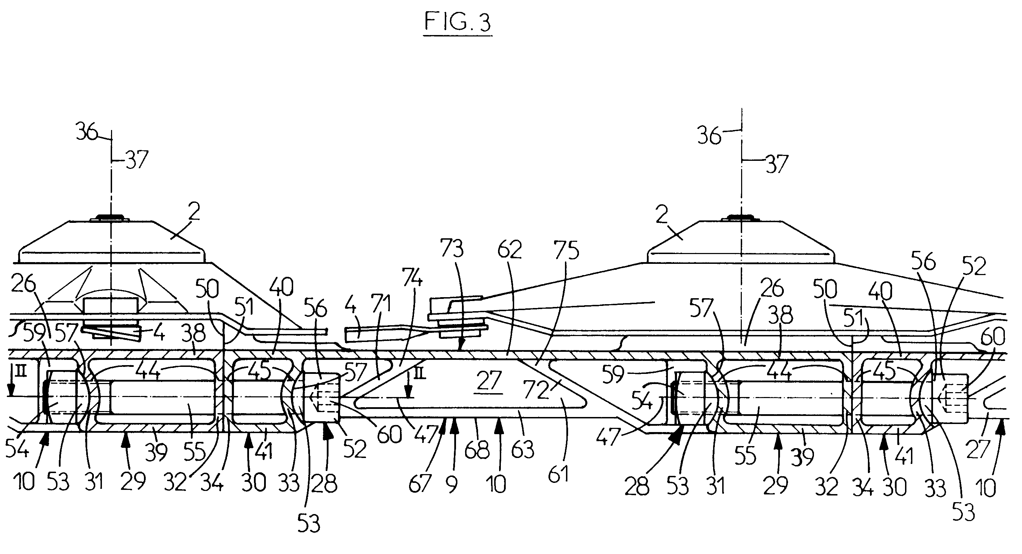

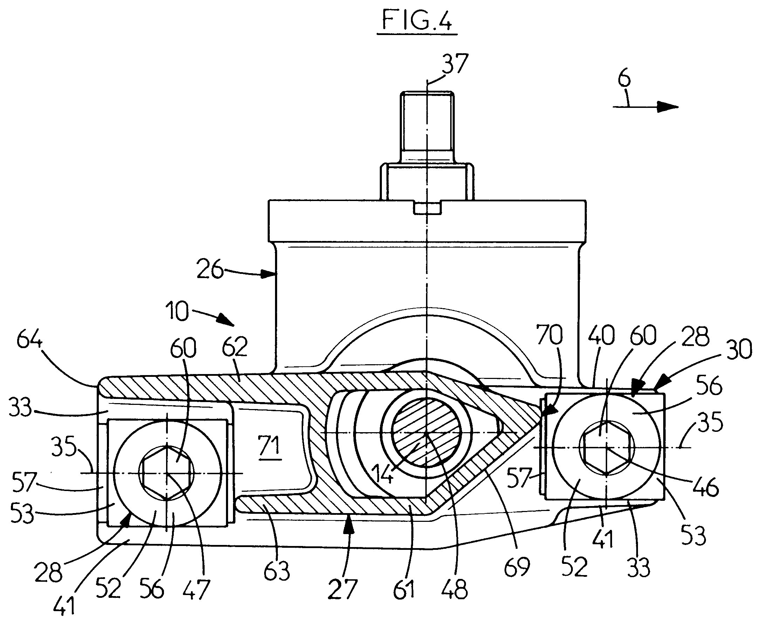

Les ailes (31, 32 ; 33, 34) des brides (29 ; 30) comportent à l'avant un trou (42 ; 43) et, à l'arrière, un trou (44 ; 45). Lesdits trous (42, 44 ; 43, 45) traversent les ailes (31, 32 ; 33, 34) de part en part. Comme visible sur les figures 2 et 3, les trous (42 ; 43) et (44 ; 45) sont coaxiaux. Sur les figures 4, 5 et 6, il apparaît en sus que l'axe commun (46) des trous avant (42 ; 43) et l'axe commun (47) des trous arrière (44 ; 45) s'étendent au moins sensiblement dans le voisinage du plan médian horizontal (49) de la face de contact (50 ; 51) des ailes (32 ; 34) des brides (29 ; 30).

Ces trous (42, 44 ; 43, 45) aménagés dans les ailes (31, 32 ; 33, 34) des brides (29 ; 30), sont traversés par les tirants d'assemblage (28) qui s'étendent donc, vus dans la direction de travail (6), entre les deux ailes de raccord (38, 39 ; 40, 41) raccordant les ailes (31, 32 ; 33, 34) entre elles. Chaque tirant d'assemblage (28) est constitué d'un tirant (52), de deux rondelles (53) et d'un écrou (54) vissé sur la tige (55) dudit tirant (52). Les rondelles (53) sont intercalées d'une part entre la tête (56) du tirant (52) et l'aile (33) de la bride (30) et d'autre part entre l'écrou (54) et l'aile (31) de la bride (29). Ces rondelles (53) sont avantageusement réalisées en acier, de préférence trempé, pour que la surface de contact entre la tête (56) du tirant (52) et la rondelle (53) correspondante de même que la surface de contact entre l'écrou (54) et la rondelle (53) correspondante puissent correctement résister à la pression engendrée par le serrage de l'écrou (54) sur le tirant (52) et par les sollicitations encaissées par le tirant (52) et l'écrou (54) pendant le travail ou le transport.

Comme les ailes (31 ; 33) des brides (29 ; 30) sont en fonte, on a également augmenté la surface de la face d'appui (57) desdites ailes (31 ; 33) destinée à venir en contact avec les rondelles (53). Pour ce faire, la face d'appui (57) des ailes (31 ; 33) a la forme d'une portion de surface cylindrique. De même, la face de chaque rondelle (53) destinée à venir en contact avec ladite face d'appui (57) des ailes (31 ; 33) a également la forme d'une portion de surface cylindrique de dimension sensiblement identique à celle de la face d'appui (57).

Comme visible sur les figures 2 et 3, l'incurvation de la face d'appui (57) des ailes (31 ; 33), en forme de portion de surface cylindrique, est dirigée vers la face de contact (50 ; 51) des ailes (32 ; 34) respectives. Ceci autorise la réalisation d'un usinage très soigné de la face d'appui (57) des ailes (31 ; 33) pour que le contact entre l'aile (31 ; 33) et la rondelle (53) respective soit optimal. On garantit ainsi une bonne tenue de carter (9) après assemblage des différents modules (10). Ici, l'axe (35) de la portion de surface cylindrique qui forme la face d'appui (57) des ailes (31 ; 33) des brides (29 ; 30), s'étend sensiblement dans la direction de travail (6).

Etant donné que l'augmentation de la surface de la face d'appui (57) des ailes (31 ; 33) a été réalisée comme il vient d'être décrit plus haut, il a été possible de garder au carter (9) toute sa compacité.

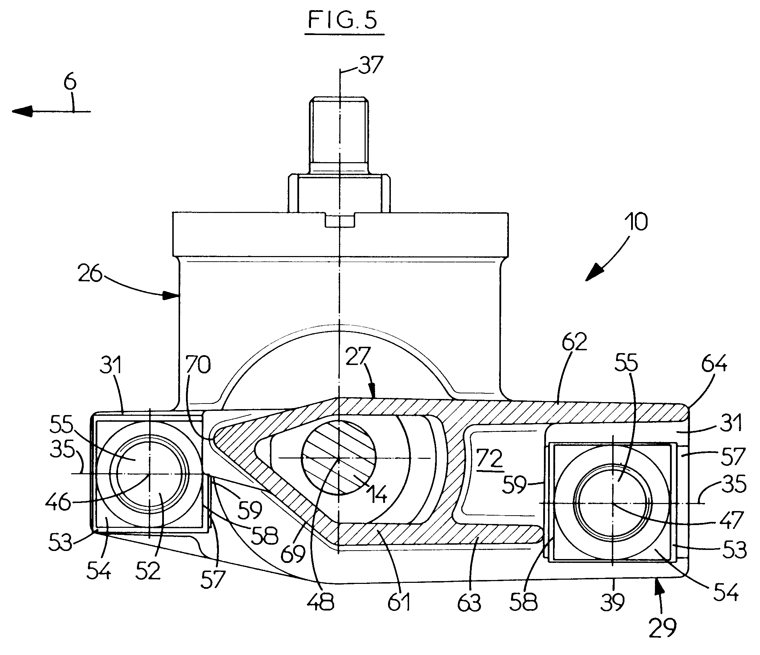

Sur les figures 2 et 5, on voit encore que l'un (58) des côtés de chaque écrou (54) s'étend dans le voisinage d'une partie (59) du module (10). Ceci permet de bloquer automatiquement la rotation de l'écrou (54) lors du vissage ou du dévissage, lorsque le côté (58) de l'écrou (54) vient buter sur la partie (59) du module (10). De cette sorte, il n'est pas nécessaire d'utiliser un outil pour réaliser ce blocage. Afin que le blocage soit effectivement réalisé, tout en laissant un certain jeu entre le côté (58) de l'écrou (54) et la partie (59) du module (10) compatible avec les tolérances générales de la fonderie, l'écrou (54) a avantageusement une forme carrée. Le côté (58) dudit écrou (54) a ainsi une longueur relativement grande, de sorte que le blocage soit toujours effectivement réalisé.

Sur les figures 3 et 4, on voit en sus que la tête (56) de chaque tirant (52) est avantageusement ronde et comporte un logement central à six pans (60). L'avantage de cet agencement apparaîtra ultérieurement.

Comme dit plus haut, le module (10) se compose d'un boîtier (26) dans lequel est guidé en rotation l'organe de coupe (2 ; 3) correspondant, et d'une entretoise (27) qui s'étend entre ce boîtier (26) et le boîtier (26) d'un module (10) adjacent.

Sur les figures 4, 5 et 6, on voit que l'entretoise (27) est formée, sur une partie au moins de sa longueur, par un profil tubulaire (61) qui entoure les moyens de transmission (14) logés dans le carter (9). A l'arrière, le profil tubulaire (61) est muni de deux ailes de rigidification (62, 63) dont l'une (62) se raccorde à la partie supérieure du profil tubulaire (61) et dont l'autre (63) se raccorde à la partie inférieure dudit profil tubulaire (61).

L'aile de rigidification supérieure (62) est plus large que l'aile de rigidification inférieure (63). Cela permet notamment de bien intégrer les tirants d'assemblage (28), situés à l'arrière, dans le gabarit du carter (9) sans que la largeur et l'épaisseur du carter (9) ne deviennent trop importantes. Ceci est très important pour l'obtention d'une bonne qualité de travail. On voit, en effet, que les tirants d'assemblage arrière (28) s'étendent, en vue de dessus, sensiblement entièrement sous les ailes de raccord supérieures (38 ; 40) et sous les ailes de rigidification supérieures (62). Avantageusement, la largeur de l'aile de rigidification supérieure (62) est sensiblement le double de la largeur de l'aile de rigidification inférieure (63). En sus, ces deux ailes de rigidification (62, 63) s'étendent transversalement à la direction de travail (6) (c'est-à-dire, au moins sensiblement parallèlement à l'axe longitudinal (48) du carter (9)) et sensiblement horizontalement. Du reste, il est encore visible sur les figures 2, 3, 4 et 5 que l'aile de rigidification supérieure (62) est en partie au moins la continuité de la partie arrière des ailes de raccord supérieures (38 ; 40) des brides (29 ; 30). La figure 2 montre en particulier que le bord arrière (64) de l'aile de rigidification supérieure (62) est sensiblement colinéaire avec le bord arrière (65 ; 66) des ailes de raccord supérieures (38 ; 40) des brides (29 ; 30).

L'aile de rigidification inférieure (63) est également, en partie au moins (notamment à ses extrémités), en continuité avec la partie arrière des ailes de raccord inférieures (39 ; 41) des brides (29 ; 30). Dans sa partie médiane (67), l'aile de rigidification inférieure (63) comporte un décrochement (68) en direction de l'aile de rigidification supérieure (62). L'espace entre ladite aile de rigidification inférieure (63) et le sol sur lequel glisse le carter (9) pendant le travail, est donc ainsi très grand pour que la terre qui glisse le long de la face inférieure (69) du bord frontal (70) de l'entretoise (27), puisse passer aisément sous l'aile de rigidification inférieure (63). On évite ainsi des bourrages.

Afin d'augmenter la tenue du module (10), il est encore visible que les deux ailes de rigidification (62, 63) sont liées entre elles par des nervures (71, 72) dirigées transversalement à l'axe longitudinal (48) du carter (9). Comme visible sur la figure 3, les nervures (71, 72) s'étendent sensiblement à partir des extrémités de l'aile de rigidification inférieure (63), obliquement vers le haut en convergeant vers la partie médiane (73) de l'aile de rigidification supérieure (62). Les points de raccord (74, 75) des nervures (71, 72) à l'aile de rigidification supérieure (62) sont sensiblement agencés au premier tiers et au second tiers de la longueur de l'aile de rigidification supérieure (62). Du reste, on voit encore que la largeur des nervures (71, 72) est sensiblement égale à la largeur de l'aile de rigidification inférieure (63) qui est la moins large.

Grâce à cet agencement, l'entretoise (27) du module (10) est très résistante, étant donné que les nervures (71, 72) forment une sorte de triangulation. Du reste, il est encore à noter que la réalisation des nervures (71, 72) est relativement aisée en fonderie.

Comme dit plus haut, les tirants (52) ont une tête (56) ronde qui est munie d'un logement central (60) à six pans. Ceci a permis de garder au carter (9) sa compacité, sans pour autant agir au détriment de la facilité du montage. Il est en effet très aisé d'accéder à la tête (56) du tirant (52) avec un outil tel qu'une visseuse pneumatique par exemple.

Différentes modifications ou améliorations peuvent être apportées à l'exemple de réalisation qui vient d'être décrit sans qu'on sorte pour autant du cadre de la présente invention, tel que défini dans les revendications.

## Revendications

1. Faucheuse comportant des organes de coupe rotatifs (2-4 ; 3-4) munis d'au moins un outil de coupe (4), au moins un de ces organes de coupe rotatifs (2-4 ; 3-4) étant entraîné par des moyens de transmission (14) logés dans un carter (9) s'étendant sous lesdits organes de coupe rotatifs (2-4 ; 3-4), ledit carter (9) comportant des modules (10) comprenant chacun un boîtier (26) dans lequel est guidé en rotation un organe de coupe (2-4 ; 3-4), une entretoise (27) s'étendant entre ce boîtier (26) et le boîtier (26) d'un module (10) adjacent et deux brides (29 ; 30) dont une première (29) s'étend du côté du boîtier (26) et la deuxième (30) s'étend à l'extrémité de l'entretoise (27) éloignée du boîtier (26), ces brides (29 ; 30) qui comportent au moins une aile (31, 32 ; 33, 34), étant destinées à la liaison de deux modules (10) adjacents l'un à l'autre au moyen de tirants d'assemblage (28) traversant à la fois la partie frontale et la partie arrière de la première bride (29) d'un module (10) et de la deuxième bride (30) du module (10) adjacent, chacune desdites brides (29 ; 30) comportant une aile (31 ; 33) présentant une face d'appui (57) contre laquelle s'appuient les tirants d'assemblage (28) correspondants, et une aile (32 ; 34) présentant une face de contact (50 ; 51), la face de contact (50) de la première bride (29) d'un module (10), destinée à être en contact avec la face de contact (51) de la deuxième bride (30) du module (10) adjacent, s'étendant du côté du plan vertical (36) contenant l'axe de rotation (37) de l'organe de coupe (2-4 ; 3-4) correspondant et perpendiculaire à l'axe longitudinal (48) du carter (9), opposé à celui où s'étend l'entretoise (27) correspondante, caractérisée en ce que la face d'appui (57) de ladite première bride (29) dudit module (10) s'étend du côté dudit plan vertical (36) où s'étend également l'entretoise (27) correspondante, et que les tirants d'assemblage (28) liant ce module (10) et le module (10) adjacent entre eux sont exclusivement au nombre de deux, l'un traversant la partie frontale des ailes (31, 32 ; 33, 34) des brides (29 ; 30) respectives et l'autre la partie arrière de celles-ci.

2. Faucheuse selon la revendication 1, caractérisée en ce que la première bride (29) d'un module (10) est plus large que la deuxième bride (30) de celui-ci.

3. Faucheuse selon la revendication 1 ou 2, caractérisée en ce que les ailes (31, 32 ; 33, 34) des deux brides (29 ; 30) d'un module (10) sont munies respectivement à l'avant et à l'arrière d'un trou (42 ; 43), respectivement (44 ; 45), lesdits trous (42, 44 ; 43, 45) servant au passage des tirants d'assemblage (28), et que l'axe commun (46) des trous avant (42 ; 43) et l'axe commun (47) des trous arrière (44 ; 45) s'étendent dans le voisinage du plan médian sensiblement horizontal (49) de ladite face de contact (50 ; 51) de chaque bride (29 ; 30).

4. Faucheuse selon une ou plusieurs des revendications 1 à 3, caractérisée en ce que le carter (9) est, d'une manière connue en soi, muni à l'avant, sous chaque organe de coupe (2-4 ; 3-4), d'un patin protecteur (23), et que la partie frontale de la première bride (29) d'un module (10) et de la deuxième bride (30) du module (10) adjacent, de même que le tirant d'assemblage (28) traversant la partie frontale de ces deux brides (29 ; 30) s'étendent sensiblement à l'intérieur du patin protecteur (23) correspondant.

5. Faucheuse selon une ou plusieurs des revendications 1 à 4, caractérisée en ce que ladite face d'appui (57) de chaque bride (29 ; 30) présente, au niveau du tirant d'assemblage (28) correspondant, une forme de portion de surface cylindrique, et que la face dudit tirant d'assemblage (28) destinée à venir en contact avec cette face d'appui (57) a également la forme d'une portion de surface cylindrique de dimension sensiblement identique à celle de ladite face d'appui (57).

6. Faucheuse selon la revendication 5, caractérisée en ce que l'incurvation de ladite face d'appui (57) de chaque bride (29 ; 30) en forme de portion de surface cylindrique est dirigée vers ladite face de contact (50 ; 51) de ladite bride (29 ; 30).

7. Faucheuse selon une ou plusieurs des revendications 1 à 6, caractérisée en ce que chaque tirant d'assemblage (28) se compose d'un tirant (52), de deux rondelles (53) et d'un écrou (54).

8. Faucheuse selon la revendication 7 prise en combinaison avec la revendication 5 ou 6, caractérisée en ce que la face d'un tirant d'assemblage (28) destinée à venir en contact avec ladite face d'appui (57) correspondante des brides (29 ; 30) respectives, est prévue sur les deux rondelles (53).

9. Faucheuse selon la revendication 7 ou 8, caractérisée en ce qu'un module (10) comporte au moins une partie (59) contre laquelle vient en butée au moins un côté (58) de l'écrou (54) respectif de sorte à bloquer la rotation de cet écrou (54) lors du vissage ou du dévissage du tirant (52).

10. Faucheuse selon la revendication 9, caractérisée en ce que l'écrou (54) a une forme carrée.

11. Faucheuse selon une ou plusieurs des revendications 7 à 10, caractérisée en ce que la tête (56) du tirant (52) est ronde et comporte un logement central (60) à six pans.

12. Faucheuse selon une ou plusieurs des revendications 1 à 11, caractérisée en ce que le boîtier (26) et l'entretoise (27) d'un module (10) forment, d'une manière connue en soi, une seule pièce.

## Claims

1. A mower comprising rotary cutter members (2 - 4; 3 - 4) equipped with at least one cutting tool (4), at least one of these rotary cutter members (2 - 4; 3 - 4) being driven by transmission means (14) housed in a housing (9) extending under the said rotary cutter members (2 - 4; 3 - 4), the said housing (9) comprising modules (10) each having a casing (26) in which a cutter member (2 - 4; 3 - 4) is guided in rotation, a spacer (27) extending between this casing (26) and the casing (26) of an adjacent module (10) and two flanges (29; 30) of which a first (29) extends at the side of the casing (26) and the second (30) extends at the end of the spacer (27) remote from the casing (26), these flanges (29; 30) which comprise at least one wing (31, 32; 33, 34), being intended for the connection of two adjacent modules (10) to one another by means of assembly tie rods (28) passing at once through the front part and the rear part of the first flange (29) of a module (10) and of the second flange (30) of the adjacent module (10), each of the said flanges (29; 30) comprising a wing (31; 33) having a support face (57) against which rest the corresponding assembly tie rods (28), and a wing (32; 34) having a contact face (50; 51), the contact face (50) of the first flange (29) of a module (10), intended to come into contact with the contact face (51) of the second flange (30) of the adjacent module (10), extending on that side of the vertical plane (36) containing the axis of rotation (37) of the corresponding cutter member (2 - 4; 3 - 4) and perpendicular to the longitudinal axis (48) of the housing (9), opposite to that side where the corresponding spacer (27) extends, characterised in that the support face (57) of the said first flange (29) of the said module (10) extends on that side of the said vertical plane (36) where the corresponding spacer (27) also extends, and in that the assembly tie rods (28) connecting this module (10) and the adjacent module (10) together are exclusively two, one passing through the front part of the wings (31, 32; 33, 34) of the respective flanges (29; 30) and the other, through the rear part of these latter.

2. A mower in accordance with claim 1, characterised in that the first flange (29) of a module (10) is larger than the second flange (30) of the latter.

3. A mower in accordance with claim 1 or 2, characterised in that the wings (31, 32; 33, 34) of the two flanges (29; 30) of a module (10) are equipped respectively at the front and at the rear with a hole (42; 43), respectively (44; 45), the said holes (42, 44; 43, 45) providing the passage for the assembly tie rods (28), and in that the common axis (46) of the front holes (42; 43) and the common axis (47) of the rear holes (44; 45) extend in the vicinity of the approximately horizontal median plane (49) of the said contact face (50; 51) of each flange (29; 30).

4. A mower in accordance with one or more of claims 1 to 3, characterised in that the housing (9) is, in a manner known in itself, equipped at the front under each cutter member (2 - 4; 3 - 4), with a protective skid (23), and in that the front part of the first flange (29) of a module (10) and of the second flange (30) of the adjacent module (10), as well as the assembly tie rod (28) passing through the front part of these two flanges (29; 30), extend approximately inside the corresponding protective skid (23).

5. A mower in accordance with one or more of claims 1 to 4, characterised in that the said support face (57) of each flange (29; 30) has, at the level of the corresponding assembly tie rod (28), the shape of a cylindrical surface portion, and in that the face of the said assembly tie rod (28) intended to come into contact with this support face (57) also has the shape of a cylindrical surface portion of a size approximately identical to that of the said support face (57).

6. A mower in accordance with claim 5, characterised in that the curvature of the said support face (57) of each flange (29; 30) having the shape of a cylindrical surface portion is directed towards the said contact face (50; 51) of the said flange (29; 30).

7. A mower in accordance with one or more of claims 1 to 6, characterised in that each assembly tie rod (28) is composed of a tie rod (52), two washers (53) and a nut (54).

8. A mower in accordance with claim 7 taken in combination with claim 5 or 6, characterised in that the face of an assembly tie rod (28) intended to come into contact with the said corresponding support face (57) of the respective flanges (29; 30), is provided on the two washers (53).

9. A mower in accordance with claim 7 or 8, characterised in that a module (10) has at least one part (59) against which at least one side (58) of the respective nut (54) abuts in such a way as to block the rotation of this nut (54) when the tie rod (52) is tightened or loosened.

10. A mower in accordance with claim 9, characterised in that the nut (54) has a square shape.

11. A mower in accordance with one or more of claims 7 to 10, characterised in that the head (56) of the tie rod (52) is round and has a central hexagonal hole (60).

12. A mower in accordance with one or more of claims 1 to 11, characterised in that the casing (26) and the spacer (27) of a module (10) form, in a manner known in itself a single piece.

## Patentansprüche

1. Mähmaschine mit rotierenden Schneidorganen (2-4 ; 3-4), die mit mindestens einem Schneidwerkzeug (4) versehen sind, wobei zumindest eines dieser rotierenden Schneidorgane (2-4 ; 3-4) durch in einem sich unterhalb der rotierenden Schneidorgane (2-4 ; 3-4) erstreckenden Gehäuse (9) untergebrachte Übertragungsmittel (14) angetrieben wird, welches Gehäuse (9) Module (10) aufweist, die jeweils ein Lagergehäuse (26), in dem ein Schneidorgan (2-4 ; 3-4) drehbar geführt ist, ein Zwischenstück (27), das sich zwischen diesem Lagergehäuse (26) und dem Lagergehäuse (26) eines benachbarten Moduls (10) erstreckt, und zwei Flansche (29 ; 30) umfassen, von denen sich der erste (29) auf der Seite des Lagergehäuses (26) erstreckt und der zweite (30) sich am vom Lagergehäuse (26) entfernten Ende des Zwischenstücks (27) erstreckt, wobei diese Flansche (29 ; 30), die zumindest einen Flügel (31, 32 ; 33, 34) aufweisen, zur Verbindung von zwei benachbarten Modulen (10) miteinander mittels Spannstangen (28) bestimmt sind, die zugleich den Vorderteil und den Hinterteil des ersten Flansches (29) eines Moduls (10) und des zweiten Flansches (30) des benachbarten Moduls (10) durchsetzen, und wobei jeder dieser Flansche (29 ; 30) mit einem Flügel (31; 33), der eine Abstützfläche (57) aufweist, gegen welche sich die entsprechenden Spannstangen (28) abstützen, und mit einem Flügel (32 ; 34) versehen ist, der eine Kontaktfläche (50 ; 51) aufweist, welche Kontaktfläche (50) des ersten Flansches (29) eines Moduls (10), die zum Kontakt mit der Kontäktfläche (51) des zweiten Flansches (30) des benachbarten Moduls (10) bestimmt ist, sich auf der Seite der die Drehachse (37) des entsprechenden Schneidorgans (2-4 ; 3-4) enthaltenden und sich senkrecht zur Längsachse (48) des Gehäuses (9) erstreckenden Vertikalebene (36) befindet, die derjenigen gegenüberliegt, wo sich das entsprechende Zwischenstück (27) erstreckt, dadurch gekennzeichnet, dass die Abstützfläche (57) des ersten Flansches (29) des Moduls (10) sich auf der Seite der Vertikalebene (36) erstreckt, wo sich auch das entsprechende Zwischenstück (27) erstreckt, und dass die Spannstangen (28), die das Modul (10) und das benachbarte Modul (10) miteinander verbinden, ausschliesslich zwei an der Zahl sind, wobei die eine den Vorderteil der Flügel (31, 32 ; 33, 34) der entsprechenden Flansche (29 ; 30) und die andere den Hinterteil derselben durchsetzt.

2. Mähmaschine nach Anspruch 1, dadurch gekennzeichnet, dass der erste Flansch (29) eines Moduls (10) breiter ist als der zweite Flansch (30) desselben.

3. Mähmaschine nach Anspruch 1 oder 2, dadurch gekennzeichnet, dass die Flügel (31, 32 ; 33, 34) der beiden Flansche (29 ; 30) eines Moduls (10) sowohl vorne als auch hinten mit einem Loch (42 ; 43) bzw. (44 ; 45) versehen sind, wobei die Löcher (42, 44 ; 43, 45) zum Durchführen der Spannstangen (28) dienen, und dass die gemeinsame Achse (46) der vorderen Löcher (42 ; 43) und die gemeinsame Achse (47) der hinteren Löcher (44 ; 45) sich in der Nähe der im wesentlichen horizontalen Mittelebene (49) der Kontaktfläche (50 ; 51) jedes Flansches (29 ; 30) erstrecken.

4. Mähmaschine nach einem oder mehreren der Ansprüche 1 bis 3, dadurch gekennzeichnet, dass das Gehaüse (9) in an sich bekannter Weise vorne unter jedem Schneidorgan (2-4 ; 3-4) mit einer Schutzkufe (23) versehen ist, und dass der Vorderteil des ersten Flansches (29) eines Moduls (10) und des zweiten Flansches (30) des benachbarten Moduls (10) ebenso wie die Spannstange (28), die den Vorderteil dieser beiden Flansche (29 ; 30) durchsetzt, sich im wesentlichen im Inneren der entsprechenden Schutzkufe (23) erstrecken.

5. Mähmaschine nach einem oder mehreren der Ansprüche 1 bis 4, dadurch gekennzeichnet, dass die Abstützfläche (57) jedes Flansches (29 ; 30) im Bereich der entsprechenden Spannstange (28) die Form eines Zylinderflächenabschnittes hat, und dass die Fläche der Spannstange (28), die dazu bestimmt ist mit dieser Abstützfläche (57) in Kontakt zu kommen, ebenfalls die Form eines Zylinderflächenabschnittes mit im wesentlichen gleicher Abmessung wie jene dieser Abstützfläche (57) hat.

6. Mähmaschine nach Anspruch 5, dadurch gekennzeichnet, dass die Krümung der Abstützfläche (57) jedes Flansches (29 ; 30) in Form eines Zylinderflächenabschnittes gegen die Kontaktfläche (50 ; 51) dieses Flansches (29 ; 30) gerichtet ist.

7. Mähmaschine nach einem oder mehreren der Ansprüche 1 bis 6, dadurch gekennzeichnet, dass jede Spannstange (28) aus einer Stange (52), zwei Unterlegscheiben (53) und einer Mutter (54) besteht.

8. Mähmaschine nach Anspruch 7 in Kombination mit Anspruch 5 oder 6, dadurch gekennzeichnet, dass die Fläche einer Spannstange (28), die dazu bestimmt ist, mit der ensprechenden Abstützfläche (57) der betreffenden Flansche (29 ; 30) in Kontakt zu kommen, auf den zwei Unterlegscheiben (53) vorgesehen ist.

9. Mähmaschine nach Anspruch 7 oder 8, dadurch gekennzeichnet, dass ein Modul (10) zumindest einen Teil (59) aufweist, gegen welchen zumindest eine Seite (58) der betreffenden Mutter (54) derart in Anschlag kommt, dass die Drehung der Mutter (54) während des Anziehens oder Lösens der Stange (52) blockiert ist.

10. Mähmaschine nach Anspruch 9, dadurch gekennzeichnet, dass die Mutter (54) eine Quadratform hat.

11. Mähmaschine nach einem oder mehreren der Ansprüche 7 bis 10, dadurch gekennzeichnet, dass der Kopf (56) der Stange (52) rund ist und eine zentrale Innensechskantausnehmung (60) aufweist.

12. Mähmaschine nach einem oder mehreren der Ansprüche 1 bis 11, dadurch gekennzeichnet, dass das Lagergehäuse (26) und das Zwischenstück (27) eines Moduls (10) in an sich bekannter Weise ein einziges Stück bilden.
